# FASCICULE DE BREVET EUROPEEN

(11) **EP 3 154 839 B1**
(45) Date de publication et mention de la délivrance du brevet: **22.08.2018**
(21) Numéro de dépôt: 15732827.9
(22) Date de dépôt: 01.06.2015
(51) Int. Cl.: B60W 50/14, B60K 35/00, B60K 37/00

(54) **PROCÉDÉ D'AIDE A LA CONDUITE DESTINE A SENSIBILISER LE CONDUCTEUR D'UN VÉHICULE A LA CONSOMMATION EN CARBURANT ET/OU AUTRE SOURCE DE CONSOMMATION DU VÉHICULE**
FAHRHILFEVERFAHREN ZUR ERHÖHUNG DES BEWUSSTSEINS VON KRAFTFAHRZEUGFÜHRERN HINSICHTLICH DES KRAFTSTOFFVERBRAUCHS UND/ODER ANDERER VERBRAUCHSQUELLEN DES FAHRZEUGES
DRIVING ASSISTANCE METHOD FOR INCREASING THE AWARENESS OF DRIVERS OF VEHICLES ABOUT FUEL CONSUMPTION AND/OR OTHER CONSUMPTION SOURCES OF THE VEHICLE

(30) Priorité: 12.06.2014 FR 1455317
(43) Date de publication de la demande: 19.04.2017
(73) Titulaire: PSA Automobiles SA, 78300 Poissy (FR)
(72) Inventeur: LARIVAIN, Alexandre, F-92800 Puteaux (FR)
(86) Numéro de dépôt international: PCT/FR2015/051437
(87) Numéro de publication internationale: WO 2015/189497

(56) Documents cités:
- EP-A1- 2 328 133
- WO-A1-2011/053304
- WO-A1-2013/005293
- FR-A1- 2 995 275
- US-A1- 2013 054 049

## Description

La présente invention concerne un procédé d'aide à la conduite destiné à sensibiliser le conducteur d'un véhicule automobile notamment à sa consommation en carburant, ainsi qu'un système d'aide à la conduite et un véhicule automobile mettant en oeuvre un tel procédé.

Elle a pour objectif principal d'informer et sensibiliser le conducteur sur les postes de surconsommation pour l'inciter à agir sur certains de ces postes dont il a la maîtrise.

Les principaux postes de surconsommation sont liés au « typage » conducteur (accélération, freinage, régime moteur, utilisation du Stop & Sart, ...) et au type de parcours (vitesse, pente, trajet court/à froid, ...)

On connaît différents procédés et systèmes d'aide à la conduite pour un véhicule comprenant un moteur thermique avec ou sans machine électrique de traction afin de réduire la consommation de carburant et/ou d'optimiser la charge ou la décharge des stockeurs d'énergie électrique, présentés notamment dans le document FR2995275.

Ces systèmes s'appuient sur des informations issues de différents capteurs équipant un véhicule aptes à suivre respectivement les différents paramètres susceptibles d'influer sur la consommation, et sur un boîtier télématique d'assistance automobile (BTA) permettant aux véhicules de communiquer avec ou des serveurs distants et/ou d'autres véhicules équipés de dispositifs équivalents pour avoir accès à un ou des services extérieurs. Le boitier, son logiciel de commande et le ou les serveurs distants avec lesquels communique le véhicule ainsi équipé, seront désignés par le terme générique « système d'informations ».

Ces boitiers se composent généralement d'un module de téléphonie mobile typiquement conforme à la norme GSM (Global System for Mobile communications en anglais ou Groupe Spécial Mobile) ou à toute autre norme de téléphonie mobile. Ce module de communication est couplé à un module de géo-positionnement (GPS) permettant de localiser précisément le véhicule, avec ou sans l'aide active d'un occupant, couplé généralement à un système de navigation. Un boitier de ce type et son procédé d'utilisation sont décrit dans le document FR291435.

Les systèmes d'aide à la conduite, présentés notamment dans le document FR2995275, permettent de gérer différentes informations comme l'état de la circulation sur le trajet emprunté par le véhicule, pour déterminer au moins un paramètre statistique sur cet état, et obtenir un signal basé sur ce paramètre qui est destiné à modifier des conditions de conduite ou de roulage du véhicule. Le paramètre statistique est établi périodiquement, à partir d'informations recueillies pendant des périodes prédéfinies de durées constantes.

De tels systèmes permettent d'établir des statistiques sur un trajet parcouru de manière répétitive, afin d'aider le conducteur à améliorer sa conduite.

Toutefois, ces statistiques ne permettent pas au conducteur de se positionner par rapport à une population d'usagers ayant le même type de véhicule : un type de véhicule étant défini généralement par le triplet : silhouette-moteur-boite de vitesses.

La présente invention a notamment pour but d'améliorer les procédés et systèmes de la technique antérieure.

A cet effet, elle propose un procédé d'aide à la conduite pour un conducteur d'un véhicule équipé d'une pluralité de capteurs aptes à délivrer des données sur les postes à surconsommation du véhicule, caractérisé en ce qu'il consiste :
- pendant le roulage du véhicule sur un trajet déterminé, à enregistrer, à une fréquence déterminée, des données sur les postes de surconsommation du véhicule ;
- à calculer des indicateurs respectivement pour chacun des postes de surconsommation ;
- à construire un profil de trajet regroupant l'ensemble des indicateurs après traitement des données enregistrées lors du trajet ;
- à partir des valeurs des indicateurs et de données statistiques d'une population de conducteurs de véhicules de même catégorie ;
- à calculer une note pour chaque poste de surconsommation ; et
- à afficher les notes au conducteur ; lesdites notes quantifiant le comportement éco-responsable du conducteur.

Selon une autre caractéristique, le procédé consiste en outre à pondérer la note en fonction de l'influence relative du poste de surconsommation sur la consommation globale du véhicule.

Selon une autre caractéristique, le procédé consiste en outre à calculer un note globale à partir de l'ensemble des notes attribuées respectivement aux postes de surconsommation et à afficher ladite note globale au conducteur ; ladite note globale quantifiant le comportement éco-responsable du conducteur.

Selon une autre caractéristique, les valeurs des indicateurs sont relevées pour différentes tranches de vitesses successives ; la pondération prenant en compte le temps passé dans chacune des tranches.

Selon une autre caractéristique, le procédé calcule les seuils de chaque indicateur permettant d'interclasser l'ensemble de la population de conducteurs par déciles; ces valeurs définissant une échelle de notation apte à noter chaque indicateur pour un trajet donné.

L'invention a pour autre objet un système d'information pour la mise en oeuvre du procédé décrit ci-dessus, caractérisé en ce qu'il comporte :
- des moyens pour, pendant le roulage du véhicule sur un trajet déterminé, enregistrer/acquérir, à une fréquence déterminée, des données sur les postes de surconsommation du véhicule ;
- des moyens pour calculer des indicateurs respectivement pour chacun des postes de surconsommation ;
- des moyens pour construire un profil de trajet regroupant l'ensemble des indicateurs après traitement par le serveur distant des données enregistrées lors du trajet ; et
- des moyens pour calculer une note pour chaque poste de surconsommation à partir des valeurs des indicateurs traitées par le serveur et d'une population de conducteurs de véhicules de même catégorie.

Elle a pour autre objet un véhicule équipé d'une pluralité de capteurs aptes à délivrer des données sur les postes à surconsommation du véhicule, un système de géolocalisation couplé à un système de navigation aptes à délivrer de données sur les trajets empruntés par le véhicule, un dispositif de communication apte à transmettre les données du véhicule vers au moins un serveur distant et à recevoir les données après traitement par le serveur distant et une interface de visualisation, caractérisé en ce qu'il exploite le système d'informations tel que décrit ci-dessus.

Le procédé selon l'invention s'appuie sur un jeu d'indicateurs très simples obtenus à partir d'informations délivrées à partir des paramètres les plus pertinents en termes de consommation (ou de surconsommation), délivrés par différents capteurs ad hoc du véhicule. A un indicateur correspond un poste de surconsommation.

Les informations se présentent sous la forme de trames temporelles qui sont remontées puis traitées par le système d'information à chaque fin de trajet. Ces informations sont utilisées pour alimenter une base de données des profils conducteurs, encore appelée « profil population » à laquelle chaque conducteur, pour chaque trajet, peut être comparé pour positionner, en relatif, son propre comportement de conduite.

Un système de notation permet à l'utilisateur de quantifier son comportement de conduite désigné par « éco-conduite », en se positionnant par rapport à une population de conducteurs utilisant le même type de véhicule (même segmentation silhouette/moteur/boite).

Les résultats peuvent s'exprimer sous la forme d'une note de 0 à 10 (10 étant la meilleure note en termes de réduction de la consommation).

Cette notation a notamment pour but de créer une certaine émulation du conducteur. Cette émulation est avantageusement exploitée pour réduire la consommation des véhicules.

L'invention a aussi pour objet un système qui comporte des moyens mettant en oeuvre un procédé comprenant l'une quelconque des caractéristiques précédentes ainsi qu'un véhicule mettant en oeuvre le procédé via le système d'informations.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 illustre un exemple d'IHM permettant l'affichage d'indicateurs relatifs aux principaux postes de surconsommation et de la note d'Ecoconduite présentée au conducteur par le procédé selon l'invention ;
- la figure 2 les étapes du procédé selon l'invention dans le sens « montant », c'est-à-dire le flux de donnée du véhicule vers le système d'information SI ;
- La figure 3 illustre par un graphe, la méthode de notation du procédé selon l'invention, applicable pour tous les indicateurs (ou postes) et pour chaque trajet 1 à n ;
- la figure 4 illustre les étapes du procédé dans le sens «descendant » c'est-à-dire le flux de données du système d'information SI vers le véhicule;
- la figure 5 illustre un exemple de pondération du procédé selon l'invention ; et
- la figure 6 illustre un exemple de profil conducteur permettant de visualiser le découpage en tranches de vitesses Vi, notamment en ce qui concerne les indicateurs Pente + et Pente - .

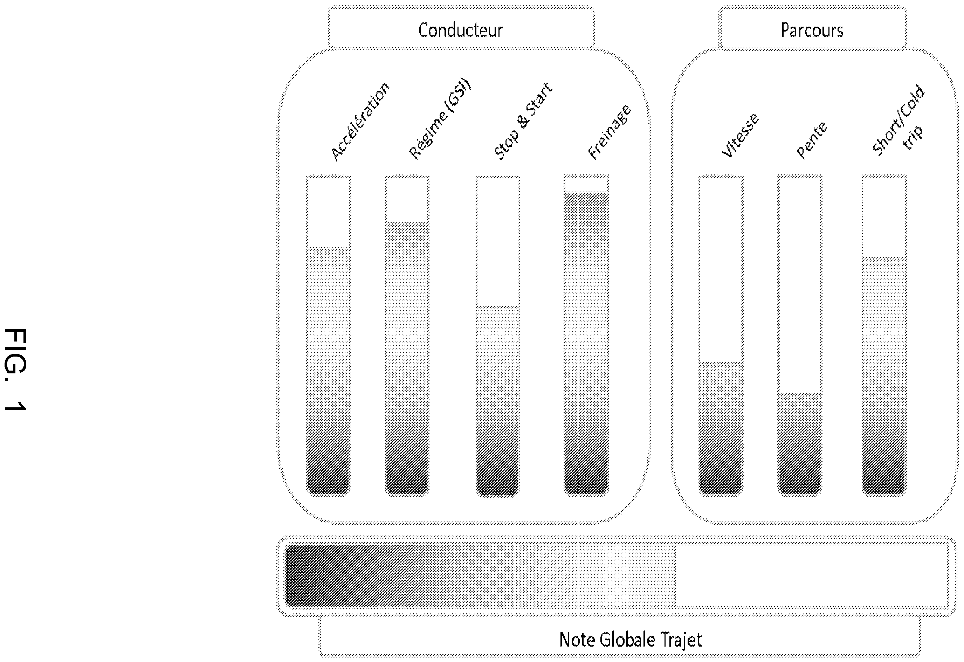

La figure 1 illustre un exemple d'IHM dédiée ou d'une ou plusieurs pages d'une IHM globale, permettant l'affichage d'indicateurs relatifs aux principaux postes de surconsommation.

Ces indicateurs sont regroupés en deux ensembles : un premier ensemble d'indicateurs intitulé « Conducteur », plutôt lié au « typage » conducteur et un deuxième ensemble d'indicateurs intitulé « parcours », plutôt lié aux caractéristiques du circuit emprunté (vitesse, pente, distance) ou aux conditions extérieures (trajet à froid par exemple). Cette distinction permet de différencier la surconsommation carburant liée à un comportement du conducteur, de celle liée au contexte ou à l'environnement (bouchons en ville, montée de col, etc...). A noter que la plupart des postes sont sensibles à la fois au comportement conducteur et au parcours, le découpage proposé se basant uniquement sur l'aspect dominant de l'un ou de l'autre.

Les indicateurs se présentent sous la forme de bargraphes parallèles les uns aux autres et orientés verticalement.

Les niveaux des bargraphes varient en fonction de l'utilisation des postes correspondants : moins un poste de surconsommation est sollicité et plus le bargraphe se remplit de bas vers le haut.

Un indicateur global se présentant également sous la forme d'un bargraphe, est agencé horizontalement sous les deux précédents ensembles. Il restitue une valeur moyenne pondérée des niveaux des différents indicateurs (Client et Parcours) pour un trajet considéré: chaque note de poste est affectée d'un poids qui est proportionnel à l'impact consommation qu'à réellement ce poste sur la consommation globale du véhicule.

Une note globale pour le trajet considéré est affichée sous l'indicateur bargraphe global ; note globale évaluant une « Ecoconduite » ou conduite « écoresponsable »

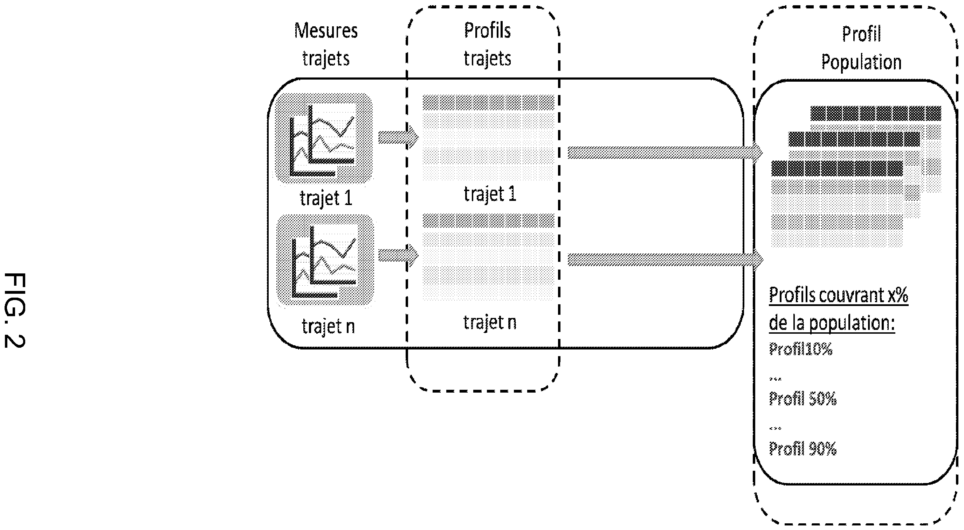

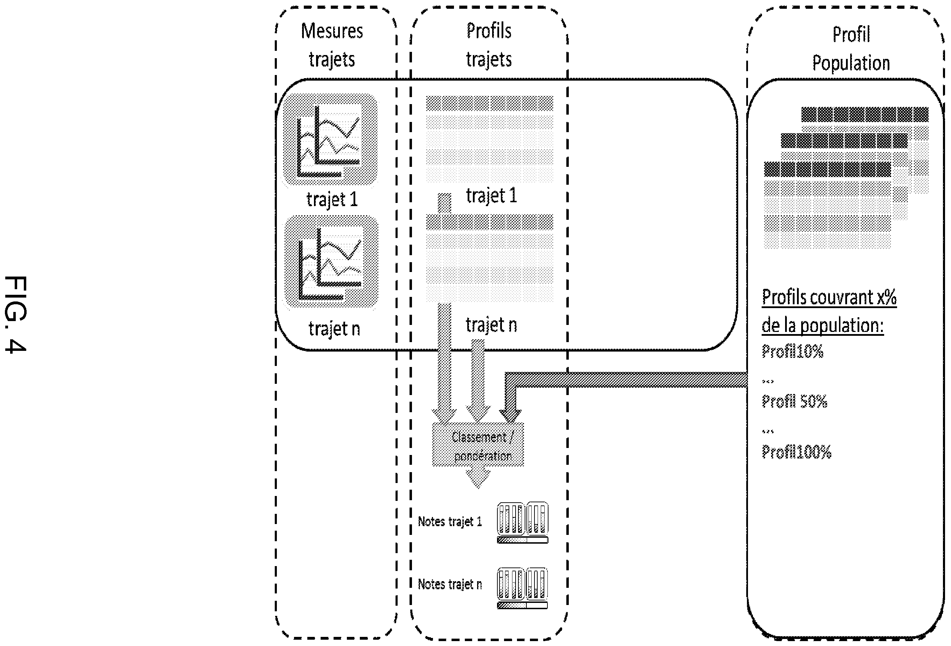

Les figures 2 et 4 illustrent de manière schématique les différentes étapes du procédé selon l'invention : la figure 2 illustre les étapes du procédé dans le sens « montant », c'est-à-dire le flux de donnée du véhicule vers le système d'information SI et la figure 4, les étapes du procédé dans le sens «descendant » c'est-à-dire le flux de données du système d'information SI vers le véhicule.

Dans une première étape désignée par « Mesures trajets », le procédé consiste à acquérir des données à partir de différents capteurs du véhicule, notamment, la vitesse, le régime moteur, la consommation instantanée, la consommation totale sur le trajet, la température d'huile, l'altitude via le système de navigation embarqué GPS.

Les données sont enregistrées à une fréquence de 1 Hz tout au long du trajet et seront utilisées en fin de trajet pour générer un fichier de données appelé « Profil trajet ».

Le « Profil trajet » permet de quantifier le degré d'éco-conduite de l'utilisateur au cours de ce trajet. Il est constitué de l'ensemble des indicateurs (un ou plusieurs indicateurs par poste) générés par post-traitement par le système d'information SI, des données enregistrées pendant le trajet.

Tous les indicateurs d'un trajet donné, calculés à partir des mesures de ce trajet, sont positionnés par rapport au « réalisé » de la population. Par réalisé de la population, on entend le jeu de seuils c0 à c10 de chacun des indicateurs obtenus après une analyse statistique de l'ensemble des « profils trajet » disponibles pour un type de véhicule donné (segmentation par silhouette/moteur/boite).

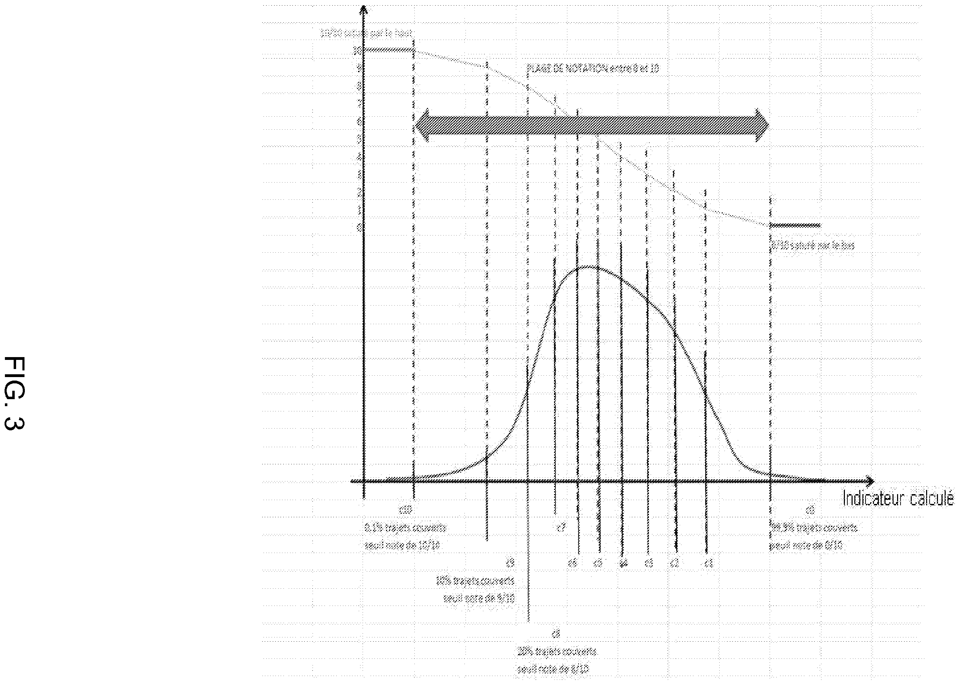

La figure 3 illustre par un graphe, la méthode de notation applicable pour tous les indicateurs (ou postes) et pour chaque trajet 1 à n.

Pour chaque indicateur, le procédé calcule les seuils permettant de couvrir chaque décile de la population et de définir la correspondance entre un indicateur et sa note.

Par construction, le procédé fixe les seuils de notation de façon à ce qu'il y ait 10% des clients dans chaque tranche de note. Il y a donc bien une répartition homogène des clients dans chaque tranche de note.

Dans l'exemple considéré à la figure 3, le procédé dispose de 10 000 trajets pour une silhouette/moteur/boite donnée.

Les trajets sont triés ensuite par ordre croissant selon l'indicateur analysé.

Le 10ème trajet (0,1% des 10 000) permet de déterminer la borne minimale c10 de l'indicateur considéré, seuil en-dessous duquel la note est saturée à 10/10.

Le 1000ème trajet (10% des 10 000) permet de déterminer le seuil c9 de la note 9/10.

Le 2000ème trajet (20% de 10 000) permet de déterminer le seuil c8 de la note 8/10 et ainsi de suite.

Le 9000ème trajet (90% des 10 000) permet de déterminer le seuil c1 de la note 1/10.

Le 9990ème trajet (99,9% des 10 000) permet de déterminer la borne max c0, seuil au-delà duquel la note est saturée à 0/10.

Pour noter un trajet donné, et pour chaque indicateur, le procédé calcule son seuil et le positionne dans l'échelle définie ci-dessus par interpolation linéaire entre le seuil immédiatement au-dessus et celui immédiatement en-dessous.

Par exemple, si c8=0.7 et c7=0.78, et que le seuil c calculé sur le trajet X renvoie c=0.74, alors la note sera de 7,5/10.

Si c=0,72, la note sera de 7,75/10 et ainsi de suite.

L'indicateur considéré peut être l'un des indicateurs (ou postes) précédemment introduits, notamment la pente (négative ou positive) ou l'accélération.

En référence à la figure 4, et une fois l'échelle de notation créée, le système d'information SI « redescend » les informations au conducteur sous forme d'une note par indicateur (classement).

Avant de présenter les notes par poste de surconsommation puis une note globale d'éco-conduite au conducteur, le procédé applique une pondération sur les notes individuelles en fonction de leur influence sur la consommation globale du véhicule.

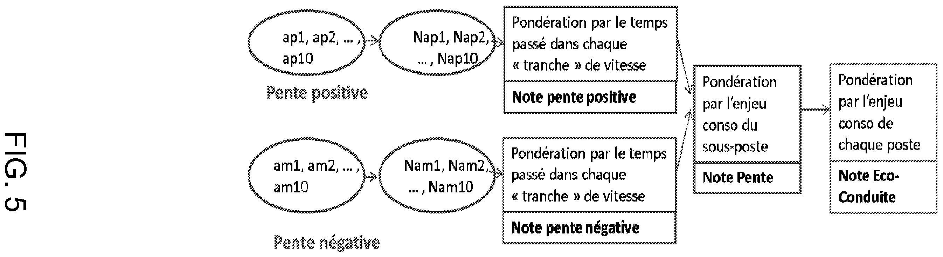

L'étape de pondération est expliquée ci-après en référence à la figure 5, en prenant comme exemple le poste de surconsommation désigné par le poste « Pente ». On distingue la pente positive de la pente négative.

Cette étape consiste à :
- calculer une « Note pente + » moyenne qui est la pondération de toutes les sous-notes « Note pente+ dans la tranche de vitesse Vi » par le pourcentage de temps passé dans chaque tranche de vitesse Vi ;
- calculer une « Note pente - » moyenne qui est la pondération de toutes les sous-notes « Note pente - dans la tranche de vitesse Vi » par le pourcentage de temps passé dans chaque tranche de vitesse Vi ;
- déterminer le poids de pente + et pente - dans la note globale « pente » ;
- déterminer le poids de la note « pente » dans la note globale « éco-conduite ».

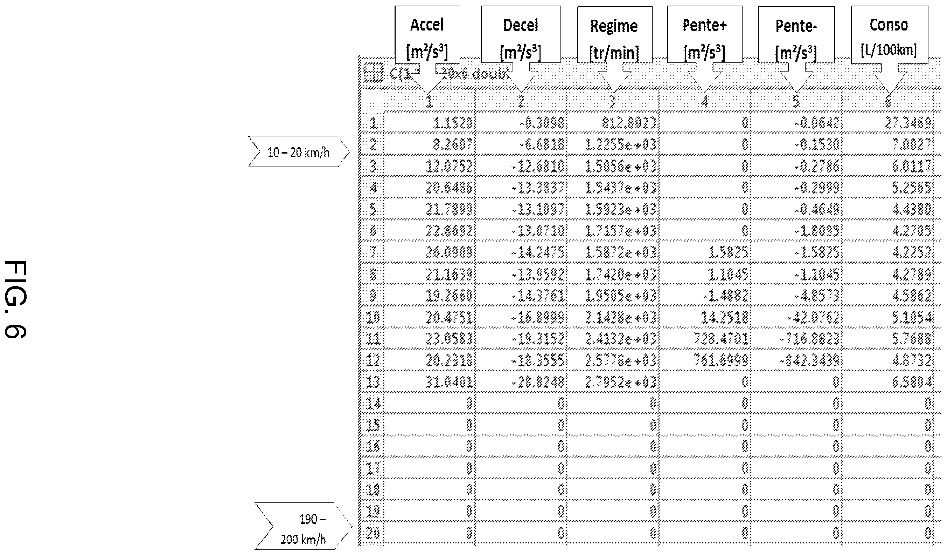

Le figure 6 illustre un exemple de profil conducteur permettant de visualiser le découpage en tranches de vitesses Vi, notamment en ce qui concerne les indicateurs Pente + et Pente -.

Dans cet exemple, les tanches de vitesses Vi sont des tranches successives de 10 km/h. Les tranches de vitesse les plus élevées peuvent être absentes en l'absence d'échantillons disponibles.

A titre de variante, on peut avantageusement envisager de mettre en oeuvre le procédé en mode auto-apprentissage dans lequel, les données transmises par le véhicule au système d'information SI, remplacent progressivement les données statistiques qui étaient pré-chargées par défaut dans le véhicule ou en bloc à partir d'un volume de données déterminé.

A titre d'exemple, les seuils de notation initiaux sont générés à partir d'une base de 6000 trajets connus issus de tout type de véhicules. Puis, partant de cette base, le système s'autoalimente au fur et à mesure, à partir des données recueillies. Le procédé bascule ainsi d'une base de données fixée à l'avance à une base autoalimentée et ciblée à chaque type de véhicule.

Les habitudes de conduite des conducteurs possédant le même type de véhicule sont alors plus fidèlement prises en compte par le système d'informations et la note globale d'Ecoconduite reflète plus précisément le comportement des conducteurs car elle s'affranchit de la part liée aux spécificités véhicule. Une bonne note est alors plus gratifiante.

Le procédé selon l'invention peut être mis en oeuvre en ajoutant des logiciels dans des calculateurs existants, avec peu ou pas de modification du matériel.

La partie de traitement de données en masse (Big Data) est déportée sur un serveur distant propriétaire ou loué.

Un tel procédé permet d'inciter le conducteur à une conduite éco-responsable en jouant sur l'émulation entre conducteurs du même type de véhicule ; le résultat attendu de la démarche étant une réduction de la consommation en carburant.

Parmi les applications, on peut citer notamment la gestion de flotte de véhicules de société ou de location dans laquelle les meilleurs « Eco-conducteurs » pourraient être distingués et gratifiés de différentes manières.

La présente invention ne se limite pas à la seule consommation en carburant d'un véhicule mais peut s'appliquer à d'autres postes de consommation d'un véhicule comme par exemple, la consommation en urée, la consommation en énergie électrique, ...

## Revendications

1. Procédé d'aide à la conduite pour un conducteur d'un véhicule équipé d'une pluralité de capteurs aptes à délivrer des données sur les postes à surconsommation du véhicule, procédé consistant :
- pendant le roulage du véhicule sur un trajet déterminé, à enregistrer, à une fréquence déterminée, des données sur les postes de surconsommation du véhicule ;
- à calculer des indicateurs respectivement pour chacun des postes de surconsommation ;
- à construire un profil de trajet regroupant l'ensemble des indicateurs après traitement des données enregistrées lors du trajet ;
- et **caractérisé en ce que** le procédé consiste :
- à partir des valeurs des indicateurs et de données statistiques d'une population de conducteurs de véhicules de même catégorie ;
- à calculer une note pour chaque poste de surconsommation ; et
- à afficher les notes au conducteur ; lesdites notes quantifiant le comportement éco-responsable du conducteur.

2. Procédé selon la revendication 1, **caractérisé en ce qu'**il consiste en outre à pondérer la note en fonction de l'influence relative du poste de surconsommation sur la consommation globale du véhicule.

3. Procédé selon la revendication précédente, **caractérisé en ce qu'**il consiste en outre à calculer un note globale à partir de l'ensemble des notes attribuées respectivement aux postes de surconsommation et à afficher ladite note globale au conducteur ; ladite note globale quantifiant le comportement éco-responsable du conducteur.

4. Procédé selon l'une des revendications 2 ou 3, **caractérisé en ce que** les valeurs des indicateurs sont relevées pour différentes tranches de vitesses successives ; la pondération prenant en compte le temps passé dans chacune des tranches.

5. Procédé selon l'une des revendications précédentes, **caractérisé en ce qu'**il calcule les seuils de chaque indicateur permettant d'interclasser l'ensemble de la population de conducteurs par déciles; ces valeurs définissant une échelle de notation apte à noter chaque indicateur pour un trajet donné.

6. Système d'informations pour la mise en oeuvre du procédé selon l'une des revendications précédentes, le système comportant:
- des moyens pour, pendant le roulage du véhicule sur un trajet déterminé, enregistrer/acquérir, à une fréquence déterminée, des données sur les postes de surconsommation du véhicule ;
- des moyens pour calculer des indicateurs respectivement pour chacun des postes de surconsommation ;
- **caractérisé en ce que** le système comporte :
- des moyens pour construire un profil de trajet regroupant l'ensemble des indicateurs après traitement par le serveur distant des données enregistrées lors du trajet ; et
- des moyens pour calculer une note pour chaque poste de surconsommation à partir des valeurs des indicateurs traitées par le serveur et d'une population de conducteurs de véhicules de même catégorie.

7. Véhicule équipé d'une pluralité de capteurs aptes à délivrer des données sur les postes à surconsommation du véhicule, un système de géolocalisation couplé à un système de navigation aptes à délivrer de données sur les trajets empruntés par le véhicule, un dispositif de communication apte à transmettre les données du véhicule vers au moins un serveur distant et à recevoir les données après traitement par le serveur distant et une interface de visualisation, **caractérisé en ce qu'**il exploite le système d'informations selon la revendication précédente.

## Patentansprüche

1. Verfahren zur Fahrerunterstützung für einen Kraftfahrzeugführer, das mit einer Vielzahl von Fühlern ausgestattet ist, die geeignet sind, um Daten über die Stellen mit übermäßigem Verbrauch des Fahrzeugs zu liefern, wobei das Verfahren darin besteht:
- während des Fahrens des Fahrzeugs auf einer bestimmten Strecke mit einer bestimmten Frequenz Daten über die Stellen mit übermäßigem Verbrauch des Fahrzeugs zu registrieren;
- Indikatoren jeweils für jede der Stellen mit übermäßigem Verbrauch zu berechnen;
- ein Streckenprofil aufzubauen, das alle Indikatoren nach Verarbeitung der während der Strecke aufgezeichneten Daten gruppiert,
und **dadurch gekennzeichnet, dass** das Verfahren aus Folgendem besteht:
ausgehend von den Werten der Indikatoren und statistischen Daten einer Population von Fahrzeugführern derselben Kategorie
- eine Note für jede Stelle übermäßigen Verbrauchs zu berechnen, und
- dem Führer die Noten anzuzeigen, wobei die Noten das umweltgerechte Verhalten des Führers quantifizieren.

2. Verfahren nach Anspruch 1, **dadurch gekennzeichnet, dass** es außerdem darin besteht, die Note in Abhängigkeit von dem relativen Einfluss der Stelle mit übermäßigem Verbrauch auf den Gesamtverbrauch des Fahrzeugs zu gewichten.

3. Verfahren nach dem vorhergehenden Anspruch, **dadurch gekennzeichnet, dass** es darin besteht, außerdem eine globale Note ausgehend von allen Noten, die jeweils den Stellen mit übermäßigem Verbrauch zugewiesen werden, zu berechnen und die globale Note dem Führer anzuzeigen, wobei die globale Note das umweltgerechte Verhalten des Führers quantifiziert.

4. Verfahren nach einem der Ansprüche 2 oder 3, **dadurch gekennzeichnet, dass** die Werte der Indikatoren für unterschiedliche Bereiche aufeinanderfolgender Geschwindigkeiten erhoben werden, wobei die Gewichtung die Zeit, die in jedem der Bereiche verweilt wird, berücksichtigt.

5. Verfahren nach einem der vorhergehenden Ansprüche, **dadurch gekennzeichnet, dass** es die Schwellenwerte jedes Indikators berechnet, die es erlauben, die gesamte Population von Führern nach Dezilen zusammenzustellen, wobei diese Werte eine Benotungsskala definieren, die geeignet ist, um jeden Indikator für eine gegebene Strecke zu benoten.

6. Informationssystem für die Umsetzung des Verfahrens nach einem der vorhergehenden Ansprüche, wobei das System Folgendes umfasst:
- Mittel, um während des Fahrens des Fahrzeugs auf einer bestimmten Strecke mit einer bestimmten Frequenz Daten über Stellen mit übermäßigem Verbrauch des Fahrzeugs aufzuzeichnen/zu erfassen;
- Mittel zum Berechnen der Indikatoren jeweils für jede der Stellen mit übermäßigem Verbrauch; **dadurch gekennzeichnet, dass** das System Folgendes umfasst:
- Mittel zum Aufbauen eines Streckenprofils, das sämtliche Indikatoren nach Verarbeitung der während der Strecke aufgezeichneten Daten durch den entfernten Server gruppiert, und
- Mittel zum Berechnen einer Note für jede Stelle mit übermäßigem Verbrauch ausgehend von den Werten der Indikatoren, die von dem Server verarbeitet werden, und einer Population von Fahrzeugführern derselben Kategorie.

7. Fahrzeug, das mit einer Vielzahl von Fühlern ausgestattet ist, die geeignet sind, um Daten über die Stellen mit übermäßigem Verbrauch des Fahrzeugs zu liefern, ein Geolokalisierungssystem, das mit einem Navigationssystem gekoppelt ist, das geeignet ist, um Daten über die von dem Fahrzeug befahrenen Strecken zu liefern, eine Kommunikationsvorrichtung, die geeignet ist, um die Daten des Fahrzeugs zu mindestens einem entfernten Server zu übertragen und die Daten nach Verarbeitung durch den entfernten Server zu empfangen, und eine Anzeigeschnittstelle, **dadurch gekennzeichnet, dass** es das Informationssystem nach dem vorhergehenden Anspruch nutzt.

## Claims

1. A driving assistance method for a driver of a vehicle, equipped with a plurality of sensors able to deliver data concerning the overconsumption points of the vehicle, said method consisting in:
- recording, at a defined frequency, data concerning the overconsumption points of the vehicle, while the vehicle is running along a defined course;
- calculating indicators respectively for each of the overconsumption points;
- constructing a journey profile combining all of the indicators after processing of the data recorded during the journey;
and **characterized in that** the method consists:
- from values of the indicators and statistical data of a population of drivers of vehicles of the same category
- in calculating a rating for each overconsumption point; and
- displaying the ratings to the driver; said ratings quantifying the eco-responsible behaviour of the driver.

2. The method according to Claim 1, **characterized in that** it further consists in weighting the rating as a function of the relative influence of the overconsumption point on the overall consumption of the vehicle.

3. The method according to the preceding claim, **characterized in that** it further consists in calculating an overall rating from all of the ratings attributed respectively to the overconsumption points and in displaying said overall rating to the driver; said overall rating quantifying the eco-responsible behaviour of the driver.

4. The method according to one of Claims 2 or 3, **characterized in that** the values of the indicators are taken for different ranges of successive speeds; the weighting taking into account the time spent in each of the ranges.

5. The method according to one of the preceding claims, **characterized in that** it calculates the thresholds of each indicator permitting the collating of the whole of the population of drivers by deciles; these values defining a scale of notation able to note each indicator for a given journey.

6. An information system for the implementation of the method according one of the preceding claims, the system comprising:
- means for recording/acquiring, at a defined frequency, data concerning the overconsumption points of the vehicle, while the vehicle is running along a defined course;
- means for calculating indicators respectively for each of the overconsumption points;
- **characterized in that** the system comprises:
- means for constructing a journey profile combining all the indicators after processing by the remote server of the data recorded during the journey; and
- means for calculating a rating for each overconsumption point from values of the indicators processed by the server and a population of drivers of vehicles of the same category.

7. A vehicle equipped with a plurality of sensors able to deliver data concerning the overconsumption points of the vehicle, a geolocation system coupled to a navigation system able to deliver data concerning the journeys taken by the vehicle, a communication device able to transmit the data of the vehicle to at least one remote server and to receive the data after processing by the remote server and a display interface, **characterized in that** it uses the information system according to the preceding claim.
